# EUROPÄISCHE PATENTSCHRIFT

(11) **EP 3 317 570 B1**
(45) Veröffentlichungstag und Bekanntmachung des Hinweises auf die Patenterteilung: **05.08.2020**
(21) Anmeldenummer: 16724588.5
(22) Anmeldetag: 29.04.2016
(51) Int. Cl.: F16K 41/10, B05B 1/30, B05B 7/04, B05B 7/12, B05B 12/14

(54) **NADELVENTIL**
NEEDLE VALVE
SOUPAPE À POINTEAU

(30) Priorität: 03.07.2015 DE 102015008661
(43) Veröffentlichungstag der Anmeldung: 09.05.2018
(73) Patentinhaber: Dürr Systems AG, 74321 Bietigheim-Bissingen (DE)
(72) Erfinder: HERRE, Frank, 71739 Oberriexingen (DE); MICHELFELDER, Manfred, 71711 Höpfigheim/Steinheim (DE); BAUMANN, Michael, 74223 Flein (DE); MELCHER, Rainer, 71720 Oberstenfeld (DE); BUCK, Thomas, 74343 Sachsenheim (DE)
(74) Vertreter: v. Bezold & Partner Patentanwälte - PartG mbB
(86) Internationale Anmeldenummer: PCT/EP2016/000698
(87) Internationale Veröffentlichungsnummer: WO 2017/005334

(56) Entgegenhaltungen:
- EP-A2- 1 250 964
- WO-A1-2009/019036
- DE-A1-102009 020 064
- JP-A- H09 511 680
- JP-A- 2007 275 753
- US-A- 3 463 363
- US-A1- 2013 284 285
- US-B1- 6 267 302

## Beschreibung

Die Erfindung betrifft ein Nadelventil: zur Steuerung eines Fluidstroms eines Beschichtungsmittels in einer Beschichtungsanlage, insbesondere zur Steuerung eines Stroms eines Zweikomponentengemisches aus zwei Beschichtungsmittelkomponenten (z. B. Stammlack und Härter).

Aus dem Stand der Technik sind Zweikomponentenlacke (2K-Lacke) bekannt, die aus zwei Komponenten bestehen, nämlich einem Härter (z. B. Isocyanat) und einem Stammlack. Bei der Förderung derartiger 2K-Lacke in einer Lackieranlage kommen als Absperrventile üblicherweise Nadelventile zum Einsatz, die eine verschiebbare Ventilnadel aufweisen. Die Ventilnadel verläuft hierbei durch einen Ventilraum, der im Betrieb mit dem 2K-Lack gefüllt ist, wobei der Ventilraum gegenüber dem auf die Ventilnadel wirkenden Ventilantrieb durch einen Dichtungsring abgedichtet ist. Der Dichtungsring schleift dabei mit seiner Innenseite auf der äußeren Mantelfläche der Ventilnadel und liegt mit seinem äußeren Umfang an der Innenwand des Ventilraums an.

Problematisch hierbei ist die Tatsache, dass der Härter (z. B. Isocyanat) in der Regel mit Wasser reagiert und dann aushärtet. Hierbei reichen bereits geringste Mengen Wasser aus, um den Aushärtungsprozess zu starten, sodass beispielsweise die normale Luftfeuchtigkeit bereits zum Aushärten führt. Dies ist problematisch, weil der 2K-Lack oder der verwendete Härter sehr kriechfähig und niederviskos ist und deshalb den Dichtring um die Ventilnadel unterwandern kann, sodass der 2K-Lack bzw. der Härter aus dem lackgefüllten Ventilraum in den Bereich des Ventilantriebs austreten kann. Dies kann insbesondere bei längeren Stillstandszeiten (z. B. an Wochenenden) zu einem unerwünschten Aushärten des 2K-Lacks bzw. des Härters führen. Beispielsweise kann der ausgehärtete 2K-Lack die Ventilnadel im Ventilsitz festkleben. Darüber hinaus kann der 2K-Lack an der Ventilnadel anhaften und dann im ausgehärteten Zustand den umgebenden Dichtring beschädigen, was zu einer Undichtigkeit führt. Weiterhin können ausgehärtete Ablagerungen im Ventilsitz dazu führen, dass das Ventil nicht mehr schließt. Ferner können Aushärtungen dazu führen, dass das Ventil langsamer schließt.

Besonders problematisch ist ein Ventilversagen, wenn das Ventil nicht mehr öffnen kann, da es dann stromaufwärts vor dem Ventil zu einer Überdruckstörung kommen kann, die im Extremfall zu einem Bersten der Zuleitungsschläuche führen kann, wodurch 2K-Lack bzw. Härter austreten kann, was dann erhebliche Stillstandszeiten für Reinigungs- und Reparaturarbeiten nach sich zieht.

Ein weiteres Problem besteht darin, dass in den heute üblichen 2K-Lacken oftmals abrasive Nano-Partikel enthalten sind, die zu einem vorzeitigen Verschleiß der Nadelabdichtung durch den Dichtring führen.

Schließlich kann es im Bereich der Nadelspitze zu einer chemischen Reaktion zwischen dem Medium (2K-Lack bzw. Härter) einerseits und dem Werkstoff der Nadelspitze bzw. des Ventilsitzes kommen, was ebenfalls zu einer Verklebung führen kann, wodurch das Ventil nicht mehr öffnen kann.

Zum allgemeinen technischen Hintergrund der Erfindung wird hingewiesen auf US 6 267 302, EP 1 250 964 A2 und US 2013/284285 A1.

Schließlich offenbart JP 2007-275753 A ein Nadelventil gemäß dem Oberbegriff von Anspruch 1 mit einer Membran, die eine Dichtungsfunktion erfüllt. Allerdings ermöglicht die Membran hierbei keine Verstellung der Düsennadel. Auch bei diesem Nadelventil kann ein Überdruck stromaufwärts vor dem Nadelventil also zu einem Bersten der Zuleitungsschläuche führen.

Der Erfindung liegt deshalb die Aufgabe zugrunde, ein entsprechend verbessertes Nadelventil zu schaffen.

Diese Aufgabe wird durch ein erfindungsgemäßes Nadelventil gemäß dem Hauptanspruch gelöst.

Die Erfindung umfasst die allgemeine technische Lehre, den mediengefüllten Ventilraum nicht oder zumindest nicht nur durch einen schleifenden Dichtring abzudichten, wie es bei dem eingangs beschriebenen Stand der Technik der Fall ist. Vielmehr sieht die Erfindung eine flexible Membran vor, welche die verschiebbare Ventilnadel stromaufwärts vor dem Nadelkopf ringförmig und dichtend umgibt.

Die Erfindung besteht also im Wesentlichen aus einem verbesserten Nadelventil zur Steuerung eines Fluidstroms eines Beschichtungsmittels in einer Beschichtungsanlage. Besonders eignet sich das erfindungsgemäße Nadelventil zur Steuerung eines Stroms eines Zweikomponentengemisches, das aus zwei Beschichtungsmittelkomponenten besteht, wie beispielsweise einem Stammlack und einem Härter (z. B. Isocyanat). Das erfindungsgemäße Nadelventil eignet sich jedoch auch zur Steuerung eines Stroms eines einzelnen Beschichtungsmittels, wie beispielsweise eines Härters (z. B. Isocyanat). Darüber hinaus eignet sich das erfindungsgemäße Nadelventil auch allgemein zur Steuerung von Fluidströmen von Beschichtungsmitteln (z. B. Lack) oder sonstigen Betriebsmitteln (z. B. Spülmittel) in einer Beschichtungsanlage.

Das erfindungsgemäße Nadelventil weist zunächst in Übereinstimmung mit dem Stand der Technik einen Ventilsitz und eine verschiebbare Ventilnadel mit einem Nadelschaft und einem Nadelkopf auf. Die Ventilnadel ist hierbei zwischen einer Schließstellung und einer Öffnungsstellung verschiebbar. In der Schließstellung verschließt der Nadelkopf der Ventilnadel den Ventilsitz und sperrt dadurch den Fluidstrom. In der Öffnungsstellung ist die Ventilnadel dagegen von dem Nadelkopf abgehoben und gibt dadurch den Fluidstrom frei.

Zwischen der Öffnungsstellung und der Schließstellung können in einer Erfindungsvariante verschiedene Zwischenstellungen der Ventilnadel kontinuierlich eingestellt werden, um den Fluidstrom nicht nur qualitativ (auf/zu) zu steuern, sondern auch quantitativ, d. h. mit einem einstellbaren Strömungswiderstand. In einer anderen Erfindungsvariante steuert das Nadelventil den Fluidstrom dagegen nur qualitativ, indem der Fluidstrom entweder freigegeben oder gesperrt wird.

Die Erfindung sieht nun vor, dass der die Ventilnadel umgebende und im Betrieb mediengefüllte Ventilraum durch eine flexible Membran abgedichtet wird, welche die Ventilnadel stromaufwärts vor dem Nadelkopf ringförmig und dichtend umgibt. Die flexible Membran verhindert zuverlässig, dass Beschichtungsmittel (z. B. Härter) aus dem mediengefüllten Ventilraum in Richtung des Ventilantriebs austritt und dort aushärtet.

In einem bevorzugten Ausführungsbeispiel der Erfindung ist die Ventilnadel in dem Ventilraum verschiebbar angeordnet, wobei der Ventilraum zumindest abschnittsweise zylindrisch ist. Die Membran liegt dann an ihrer Mitte vorzugsweise dichtend an dem Nadelschaft der Ventilnadel an und ist an dem Nadelschaft der Ventilnadel befestigt. Dies bedeutet, dass die Membran nicht an der Ventilnadel schleift, sondern die Verschiebebewegung der Ventilnadel zwischen der Öffnungsstellung und der Schließstellung mitmacht. Dies bedeutet, dass eine Verschiebung der Ventilnadel zu einer entsprechenden axialen Auslenkung der Membran führt. Umgekehrt führt auch eine axiale Auslenkung der Membran, beispielsweise aufgrund einer einseitigen Druckbeaufschlagung der Membran, zu einer entsprechenden Verschiebung der Ventilnadel. An ihrem Umfangsrand ist die Membran dagegen dichtend an der Innenwand des Ventilraums befestigt. Die Membran ermöglicht also mittig einen axialen Hub, der mindestens so groß ist, wie der axiale Abstand zwischen der Schließstellung und der Öffnungsstellung der Ventilnadel, damit die Membran die Bewegung der Ventilnadel nicht behindert.

In dem bevorzugten Ausführungsbeispiel der Erfindung weist das Nadelventil einen Ventilantrieb zum Verschieben der Ventilnadel auf, wobei der Ventilantrieb beispielsweise als pneumatischer Ventilantrieb mit einem Kolben ausgebildet sein kann, was an sich aus dem Stand der Technik bekannt ist und deshalb nicht näher beschrieben werden muss.

Darüber hinaus weist das erfindungsgemäße Nadelventil vorzugsweise einen Beschichtungsmitteleinlass auf, um das Beschichtungsmittel (z. B. 2K-Lack oder Härter) zuzuführen, wobei der Beschichtungsmitteleinlass vorzugsweise auf der dem Ventilantrieb abgewandten Seite der Membran in den Ventilraum mündet, sodass die Membran den Ventilantrieb gegenüber dem beschichtungsmittelgefüllten Ventilraum abdichtet.

Weiterhin enthält das erfindungsgemäße Nadelventil einen Beschichtungsmittelauslass, um das Beschichtungsmittel abzugeben, wobei der Beschichtungsmittelauslass vorzugsweise in den Ventilsitz mündet, sodass das Beschichtungsmittel in der Öffnungsstellung der Ventilnadel durch den Ventilsitz zu dem Beschichtungsmittelauslass strömen kann.

Es wurde bereits vorstehend erwähnt, dass das erfindungsgemäße Nadelventil einen Ventilantrieb aufweisen kann, um die Ventilnadel zu verschieben. In dem bevorzugten Ausführungsbeispiel der Erfindung umfasst dieser Ventilantrieb einen verschiebbaren Kolben, der auf die Ventilnadel wirkt, um die Ventilnadel zu verschieben. Der Kolben wird vorzugsweise pneumatisch angetrieben. Hierzu weist das Nadelventil vorzugsweise einen Steuerlufteinlass auf, um Steuerluft zuzuführen, wobei die Steuerluft auf den Kolben wirkt, um den Kolben und damit auch die Ventilnadel zu verschieben.

Ferner umfasst das erfindungsgemäße Nadelventil vorzugsweise eine Ventilfeder, die mit einer Federkraft auf den Kolben oder die Ventilnadel wirkt. Die Ventilfeder einerseits und die Steuerluft andererseits wirken hierbei vorzugsweise in entgegengesetzte Richtungen.

Weiterhin ist zu erwähnen, dass die Federkraft der Ventilfeder vorzugsweise mindestens 20 N, 40 N oder mindestens 80 N und/oder höchstens 400 N, 200 N oder 100 N beträgt, was vorzugsweise sowohl für die Schließstellung als auch für die Öffnungsstellung der Ventilfeder gilt.

In dem bevorzugten Ausführungsbeispiel der Erfindung drückt die Ventilfeder die Ventilnadel in Richtung der Schließstellung, wohingegen die Steuerluft die Ventilnadel über den Kolben in Richtung der Öffnungsstellung drückt. Die Ventilfeder und der Nadelkopf sind dabei vorzugsweise auf gegenüberliegenden Seiten des Kolbens angeordnet.

Hierbei ist zu erwähnen, dass der Kolben vorzugsweise einen relativ großen Kolbendurchmesser aufweist, um beim Bewegen der Ventilnadel in die Öffnungsstellung eine möglichst große Öffnungskraft zu erzeugen. Dabei ist zu berücksichtigen, dass die Öffnungskraft abhängt von der effektiven Kolbenfläche und damit auch vom Kolbendurchmesser und von dem pneumatischen Druck der Steuerluft. Der Kolben weist deshalb vorzugsweise einen Kolbendurchmesser von mindestens 5 mm, 10 mm, 15 mm, 20 mm, 25 mm, 30 mm, 32 mm oder sogar 35 mm auf. Vorzugsweise ist der Kolbendurchmesser so groß, dass sich mit einem üblichen Steuerluftdruck von weniger als 6 bar eine ausreichend große Öffnungskraft realisieren lässt. Dies ist sinnvoll, weil in Lackieranlagen meist ohnehin übliche 6-bar-Druckluftnetze zur Verfügung stehen, die dann auch zur Ansteuerung des erfindungsgemäßen Nadelventils verwendet werden können. Auf diese Weise kann also auf ein separates Druckluftnetz zur Ansteuerung des Nadelventils verzichtet werden.

Es wurde bereits vorstehend erwähnt, die Ventilfeder die Ventilnadel vorzugsweise in Richtung der Schließstellung drückt und zwar mit einer bestimmten Schließkraft. Der pneumatische Ventilantrieb drückt die Ventilnadel dagegen bei einer pneumatischen Ansteuerung mit einer bestimmten Öffnungskraft in Richtung der Öffnungsstellung. Hierbei sollte die Öffnungskraft des pneumatischen Ventilantriebs um einen bestimmten Öffnungskraftüberschuss größer sein als die Schließkraft, um das Nadelventil sicher öffnen zu können, wenn der Nadelkopf an dem Ventilsitz anhaftet. Das Nadelventil ist deshalb vorzugsweise so ausgelegt, dass der Öffnungskraftüberschuss größer ist als 20 N, 40 N, 60 N, 80 N, 100 N, 120 N oder sogar 180 N.

Es besteht jedoch alternativ auch die Möglichkeit, dass die Ventilfeder die Ventilnadel in Richtung der Öffnungsstellung drückt. Die Steuerluft drückt die Ventilnadel dann vorzugsweise in Richtung der Schließstellung. Bei dieser Erfindungsvariante sind die Ventilfeder und der Nadelkopf vorzugsweise auf derselben Seite des Kolbens angeordnet.

Bei der Beschreibung des Standes der Technik wurde eingangs bereits auf die Gefahr hingewiesen, dass die Beschichtungsmittelschläuche stromaufwärts vor dem Nadelventil bei einer Überdruckstörung auch durch Fehlbedienung oder Fehlinterpretation der Überdruckstörung bersten können, wodurch 2K-Lack oder Härter austreten können, was dann zu längeren Stillstandszeiten führt, da der ausgetretene 2K-Lack bzw. der ausgetretene Härter aushärtet. Nach dem Bersten kommt es zu keiner weiteren Überdruckstörung. Wenn die Bediener die Anlage wieder in Gang setzen, dann tritt ein Teil oder Großteil der Lackiermenge aus dem geborstenen Schlauch aus und flutet z. B. den gesamten Handachsbereich. Meist wird der Fehler dann erst entdeckt, wenn schon mehrere Liter ausgetreten sind und es zu anderen weiteren Störungen kommt, z. B. Drehzahlstörung, da die Turbinenabluft durch den Lack nicht mehr entweichen kann. Das erfindungsgemäße Nadelventil weist deshalb eine Überdruckfunktion auf, die beim Überschreiten eines bestimmten Öffnungsdrucks an dem Beschichtungsmitteleinlass zum automatischen Öffnen des Ventils führt. Hierzu drückt das in dem Ventilraum befindliche Beschichtungsmittel gegen die Membran, wodurch die Membran und damit auch die Ventilnadel aus der Schließstellung in die Öffnungsstellung gedrückt wird, wenn der Beschichtungsmitteldruck ausreichend groß ist, um die entgegen gerichtete Kraft der Ventilfeder zu überwinden. Die Membran weist deshalb vorzugsweise einen Membrandurchmesser von mindestens 3 mm, 6 mm oder 9 mm und/oder höchstens 40 mm, 20 mm oder 11 mm auf. Der Öffnungsdruck des Beschichtungsmittels an dem Beschichtungsmitteleinlass beträgt dann mindestens 8 bar, und höchstens 35 bar. Die Schließkraft der Feder muss also so an den gewünschten Öffnungsdruck und den effektiven Querschnitt der Membran angepasst werden, dass der Beschichtungsmitteldruck in dem Ventilraum beim Überschreiten des gewünschten Öffnungsdrucks die Membran und damit auch die Ventilnadel aus der Schließstellung in die Öffnungsstellung drückt.

Weiterhin ist zu erwähnen, dass sich der Ventilsitz vorzugsweise mit einem bestimmten Sitzwinkel in Strömungsrichtung verengt, wie sich auch der Nadelkopf vorzugsweise mit einem bestimmten Kopfwinkel in Strömungsrichtung verengt. In dem bevorzugten Ausführungsbeispiel ist der Sitzwinkel im Wesentlichen gleich dem Kopfwinkel. Beispielsweise kann der Sitzwinkel im Bereich von 35°-50° liegen, wie auch der Kopfwinkel vorzugsweise im Bereich von 35°-50° liegt, was eine optimale Abdichtung gewährleistet. Ein größerer Kopfwinkel verbessert hierbei den Durchfluss des Mediums bei den mit geringen Nadelhüben (ca. 1,5 mm anstelle von 3 mm bei herkömmlichen Nadelventilen) ausgestatteten erfindungsgemäßen Nadelventilen mit einer zusätzlichen Membran.

In dem bevorzugten Ausführungsbeispiel der Erfindung ist in den Nadelkopf der Ventilnadel ein zusätzliches Dichtelement eingesetzt, um den Ventilsitz in der Schließstellung abzudichten. Dieses zusätzliche Dichtelement kann aus einem anderen Material bestehen als der Nadelkopf der Ventilnadel, wobei vorzugsweise ein elastisches Material zum Einsatz kommt, wie beispielsweise FFKM (Perfluorkautschuk). Beispielsweise kann das zusätzliche Dichtelement an dem Nadelkopf anvulkanisiert sein. Es besteht jedoch auch die Möglichkeit, dass das Dichtelement in den Nadelkopf eingesetzt ist, beispielsweise in eine Ringnut in dem Nadelkopf. Der Nadelkopf selbst kann hierbei beispielsweise aus Titan oder aus einer Titanlegierung bestehen, damit der Nadelkopf gegenüber chemisch aggressiven Härtern von 2K-Lacken widerstandsfähig ist.

Es wurde bereits vorstehend kurz erwähnt, dass sich der Nadelkopf und der Ventilsitz vorzugsweise in Strömungsrichtung im Wesentlichen konisch verjüngen. Hierbei kann der Nadelkopf eine Ringnut aufweisen, in die das bereits vorstehend kurz erwähnte Dichtungselement eingesetzt sein kann. Hierbei kann das Problem auftreten, dass die auf die Ventilnadel wirkende Schließkraft vollständig von dem Dichtelement aufgenommen wird, was dann zu einer mechanischen Überlastung und Beschädigung des Dichtelements führen kann. Dies kann dadurch verhindert werden, dass der Nadelkopf einen starren Anschlag aufweist und sich in der Schließstellung mit dem Anschlag an dem Ventilsitz abstützt. Beim Schließen des Ventils wird das Dichtelement in dem Nadelkopf also nur so weit auf Druck beansprucht, bis die Ventilnadel mit ihrem Anschlag an dem Ventilsitz anliegt. Auf diese Weise wird die Kompression des Dichtelements in dem Nadelkopf beim Schließen des Ventils begrenzt, was der Lebensdauer des Dichtelements zuträglich ist.

In dem bevorzugten Ausführungsbeispiel der Erfindung wird dieser Anschlag durch eine ringförmig umlaufenden Abstützfläche gebildet, die in der konischen Mantelfläche des Nadelkopfs stromaufwärts vor dem Dichtelement liegt. Hierbei kann das Problem bestehen, dass das Dichtelement den Bereich des Nadelkopfs stromabwärts hinter dem Dichtelement abdichtet, sodass dieser Bereich bei einem Spülvorgang nicht von dem Spülmittel erreichbar ist. Dieses Problem kann im Rahmen der Erfindung dadurch gelöst werden, dass die Abstützfläche mindestens eine axial verlaufende Spülnut aufweist, durch die Spülmittel in axialer Richtung aus dem Ventilraum in den Bereich stromabwärts hinter dem Dichtelement eintreten kann. Beispielsweise kann eine solche Spülnut eine Nutbreite von 1 mm - 2 mm aufweisen.

Im Rahmen der Erfindung besteht die Möglichkeit, dass die den Ventilraum abdichtende flexible Membran den Dichtring ersetzt, der bei herkömmlichen Nadelventilen vorhanden ist. Es besteht jedoch im Rahmen der Erfindung auch die Möglichkeit, dass zusätzlich zu der flexiblen Membran zur Abdichtung auch ein herkömmlicher Dichtring vorhanden ist, der die Ventilnadel ringförmig umgibt und schleifend auf der Mantelfläche der Ventilnadel anliegt.

Der Nadelschaft der Ventilnadel weist vorzugsweise einen Durchmesser auf, der im Bereich von 2 mm - 10 mm, 3 mm - 6 mm oder 4 mm - 5 mm liegen kann. Der maximale Nadelhub der Ventilnadel ist dagegen vorzugsweise kleiner als 5 mm, 3 mm, 2,5 mm, 2 mm, 1,4 mm oder sogar kleiner als 1 mm.

Ferner ist noch zu erwähnen, dass die Erfindung nicht nur Schutz beansprucht für das vorstehend beschriebene erfindungsgemäße Nadelventil als einzelnes Bauteil. Vielmehr beansprucht die Erfindung auch Schutz für eine komplette Beschichtungsanlage mit mindestens einem solchen Nadelventil, wobei das Nadelventil beispielsweise in einem Rotationszerstäuber, in einem Zweikomponentenmischer oder in einem Zweikomponentenabsperrventil angeordnet sein kann.

Darüber hinaus umfasst die Erfindung auch eine Dosieranordnung zum Dosieren eines Beschichtungsmittels (z. B. Lack, Dichtmittel, Klebstoff, Dämmstoff) mit einem Membranventil, wobei das vorstehend beschriebene erfindungsgemäße Nadelventil mit einer Membran als Membranventilvorgesehen ist.

Die erfindungsgemäße Dosieranordnung weist zunächst eine Beschichtungsmittelleitung zur Durchleitung des Beschichtungsmittels auf. In der Beschichtungsmittelleitung ist hierbei eine Dosierpumpe zum Dosieren des Beschichtungsmittels angeordnet.

Der im Rahmen der Erfindung verwendete Begriff einer Dosierpumpe bedeutet vorzugsweise, dass der geförderte Volumenstrom unabhängig von den Druckverhältnissen am Eingang und Ausgang der Dosierpumpe ist. Beispielsweise kann es sich bei der Dosierpumpe um eine Hubkolbenpumpe, eine Schlauchpumpe, eine Membranpumpe, eine Taumelkolbenpumpe oder eine Zahnradpumpe handeln, um nur einige Beispiele zu nennen.

Darüber hinaus weist die erfindungsgemäße Dosieranordnung eine Bypassleitung zur Umgehung der Dosierpumpe auf, wobei die Bypassleitung stromaufwärts vor der Dosierpumpe von der Beschichtungsmittelleitung abzweigt und stromabwärts hinter der Dosierpumpe wieder in die Beschichtungsmittelleitung einmündet.

In der Bypassleitung ist ein Bypassventil angeordnet, das die Bypassleitung wahlweise sperren oder freigeben kann.

Im normalen Dosierbetrieb ist das Bypassventil geschlossen, so dass kein Beschichtungsmittel über die Bypassleitung strömen kann.

Hierbei werden normalerweise - jedoch nicht zwangsläufig - der Ausgangsdruck und der Eingangsdruck der Dosierpumpe durch einen Drucksensor gemessen. Falls diese Drucksensoren einen unkontrollierten Druckanstieg messen, so wird die Dosierpumpe normalerweise abgeschaltet, um eine Fehlfunktion oder gar ein Platzen einer Schlauchleitung zu verhindern.

Bei einer Fehlfunktion dieser Drucksensoren bzw. bei nicht vorhandenen Drucksensoren oder aber bei falscher Parametrierung der Einstellwerte könnte es jedoch passieren, dass es zu einem unkontrollierten Druckanstieg und dadurch zu einem Schlauchplatzer oder zu Beschädigungen im angeschlossenen Zerstäuber kommt. Das Bypassventil ist deshalb vorzugsweise als Membranventil ausgeführt, wobei der Beschichtungsmitteldruck auf die Membran des Membranventils wirkt und bei einem bestimmten Maximaldruck öffnet, wobei der Maximaldruck beispielsweise bei ca. 15-17 bar liegen kann. Die Ausführung des Bypassventils (das Ventil kann auch als Rückführventil o. ä. bezeichnet werden) als eigenmediumbetätigtes Membranventil bietet also den Vorteil, dass auch bei einem Ausfall der Drucksensoren oder beim Ausfall der externen Ansteuerung des Bypassventils ein automatisches Öffnen der Bypassleitung erfolgt, wenn dies erforderlich ist.

Darüber hinaus ist das Bypassventil vorzugsweise steuerbar, um die Bypassleitung bei einem Spülvorgang freigeben zu können. Bei einem solchen Spülvorgang hat die vorstehend beschriebene druckabhängige Selbstöffnungsfunktion keine Bedeutung. Allerdings ist es sinnvoll, die Bypassleitung bei einem Spülvorgang ebenfalls spülen zu können, um zu verhindern, dass das Bypassventil durch Beschichtungsmittelreste verklebt.

Darüber hinaus ist zu erwähnen, dass das Bypassventil auch bei jedem Andrückvorgang bei einem Farbwechsel zeitweise geöffnet wird. So wird die Beschichtungsmittelleitung bei einem Farbwechsel zunächst mit Spülmittel gespült und ggf. mit Pulsluft durchgeblasen, um Beschichtungsmittelreste des alten Beschichtungsmittels zu entfernen. Anschließend wird die Beschichtungsmittelleitung dann mit dem neuen Beschichtungsmittel befüllt, was auch als Andrücken bezeichnet wird. Bei diesem Andrücken wir das Bypassventil vorzugsweise ebenfalls kurz geöffnet. Dies ist vorteilhaft, weil das Bypassventil dadurch im Betrieb regelmäßig betätigt wird, wodurch das Bypassventil betriebsfähig gehalten wird.

Aus dem Stand der Technik sind zwar bereits Überdruckentlastungen bekannt, die einen unkontrollierten Druckanstieg verhindern. Allerdings erfolgte die Überdruckentlastung hierbei nach außen, was zu einer Kombination der Umgebung mit dem Beschichtungsmittel führt. Bei der Erfindung erfolgt die Druckentlastung dagegen in das System, indem die Bypassleitung die Dosierpumpe fluidisch kurzschließt.

Ferner ist zu erwähnen, dass das Bypassventil an die Dosierpumpe angebaut sein kann. Die Dosierpumpe weist hierbei vorzugsweise ein Gehäuse aus Edelstahl auf, während das Bypassventil ein Gehäuse aus einfachem Stahl aufweisen kann. Es könnte jedoch auf Kundenanforderung auch aus Edelstahl sein. Die Herstellung des Gehäuses der Dosierpumpe aus Edelstahl ist hierbei sinnvoll, weil die Dosierpumpe sehr genau arbeiten muss. Das Bypassventil kann dagegen einfacher und damit kostengünstiger ausgeführt sein und benötigt deshalb kein Gehäuse aus Edelstahl, da beispielsweise einfacher Stahl oder Kunststoff ausreicht. Es ist deshalb vorteilhaft, die Dosierpumpe und das Bypassventil nicht in einem einstückigen Gehäuse unterzubringen, sondern in getrennten Gehäusen, die lediglich aneinander angeflanscht sind.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Figur 1A: eine Querschnittsansicht durch ein erfindungsgemäßes Zweikomponentenabsperrventil in einer Schließstellung,
- Figur 1B: die Querschnittsansicht aus Figur 1A in einer Öffnungsstellung des Zweikomponentenabsperrventils,
- Figur 2: eine Querschnittsansicht durch einen Ventilantrieb des Zweikomponentenabsperrventils gemäß den Figuren 1A und 1B,
- Figur 3: eine schematische Darstellung eines konischen Nadelkopfs mit einem konischen Ventilsitz,
- Figur 4: einen fluidtechnischen Schaltplan einer Dosieranordnung mit einem Farbdruckregler und einer Ventileinheit mit einer Dosierpumpe, einem Bypassventil und einem Spülmittelventil,
- Figur 5A: eine Perspektivansicht der Ventileinheit aus Figur 4,
- Figur 5B: eine Frontansicht der Ventileinheit aus Figur 5A,
- Figur 5C: eine Schnittansicht der Ventileinheit entlang der Schnittlinie A-A in Figur 5B,
- Figur 5D: eine Schnittansicht der Ventileinheit entlang der Schnittlinie B-B in Figur 5B,
- Figur 5E: eine Seitenansicht der Ventileinheit aus den Figuren 5A-5D,
- Figur 5F: eine Schnittansicht durch die Ventileinheit entlang der Schnittlinie C-C in Figur 5E,
- Figur 6A: eine Perspektivansicht der Ventileinheit und der Dosierpumpe mit dem Farbdruckregler,
- Figur 6B: eine Frontansicht der Anordnung aus Figur 6A,
- Figur 6C: eine Schnittansicht entlang der Schnittlinie A-A in Figur 6B, sowie
- Figur 6D: eine Seitensicht der Anordnung aus den Figuren 6A-6C.

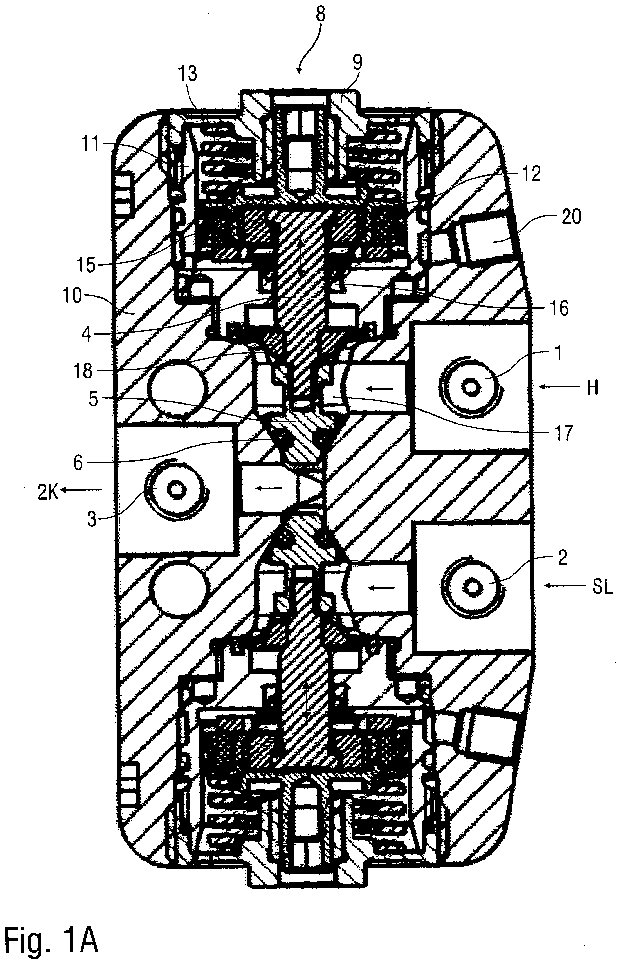

Die Figuren 1A, 1B, 2 und 3 zeigen verschieden Ansichten eines Zweikomponentenabsperrventils, das in einer Lackieranlage eingesetzt werden kann, um einen Härter H (z. B. Isocyanat) und einen Stammlack SL zusammenzuführen, wobei die Strömung des Stammlacks SL und die Strömung des Härters H getrennt gesteuert werden kann.

Das Zweikomponentenabsperrventil weist zur Zuführung des Härters H einen Härter-Anschluss 1 und zur Zuführung des Stammlacks SL einen Stammlack-Anschluss 2 auf. Der Härter H und der Stammlack SL werden in dem Zweikomponentenabsperrventil zusammengeführt und dann als vorläufige Mischung an einem Auslass 3 ausgegeben. Üblicherweise gelangt der Stammlack SL dann zusammen mit dem Härter H in einen Mischer (z. B. Gittermischer, Wendelmischer), der den Stammlack SL gründlich mit dem Härter H mischt.

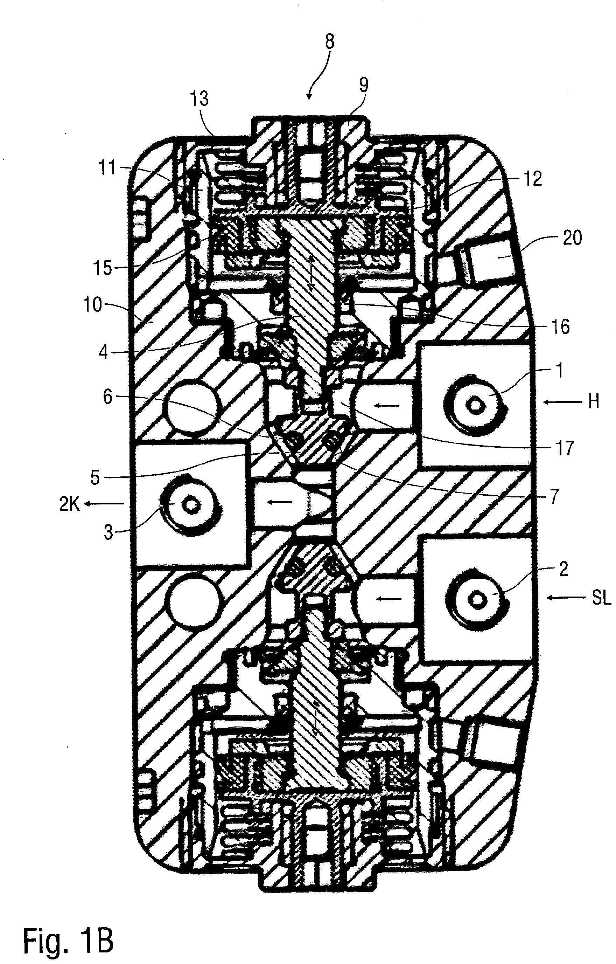

Die Strömung des Härters H von dem Härter-Anschluss 1 zu dem Auslass 3 wird hierbei durch ein Nadelventil gesteuert, das in den Zeichnungen gemäß den Figuren 1A und 1B in der oberen Hälfte dargestellt ist. Die Strömung des Stammlacks SL von dem Stammlack-Anschluss 2 zu dem Auslass 3 wird in gleicher Weise durch ein weiteres Nadelventil gesteuert, das in den Zeichnungen gemäß den Figuren 1A und 1B in der unteren Hälfte abgebildet ist. Die beiden Nadelventile für den Stammlack SL und den Härter H sind in gleicher Weise aufgebaut und funktionieren gleich, sodass zur Vermeidung von Wiederholungen im Folgenden nur das in den Zeichnungen obere Nadelventil beschrieben wird, das die Strömung des Härters H von dem Härter-Anschluss 1 zu dem Auslass 3 steuert.

Das Nadelventil weist eine verschiebbare Ventilnadel 4 auf, wobei ein Nadelkopf 5 auf das distale Ende der Ventilnadel 4 aufgeschraubt ist. Der Nadelkopf 5 besteht hierbei aus Titan und verjüngt sich zu seinem Ende hin konisch, wobei in der konisch zulaufenden Mantelfläche des Nadelkopfs 5 eine Ringnut angeordnet ist, in die ein Dichtring 6 aus FFKM (Perfluorkautschuk) eingesetzt ist.

In der Schließstellung gemäß Figur 1A liegt der Nadelkopf 5 mit dem Dichtring 6 an einem Ventilsitz 7 dichtend an, wobei sich der Ventilsitz 7 ebenfalls konisch verjüngt und in den Auslass 3 mündet.

In der Öffnungsstellung gemäß Figur 1B ist der Nadelkopf 5 dagegen von dem Ventilsitz 7 abgehoben und gibt dadurch die Strömung durch den Ventilsitz 7 zu dem Auslass 3 frei.

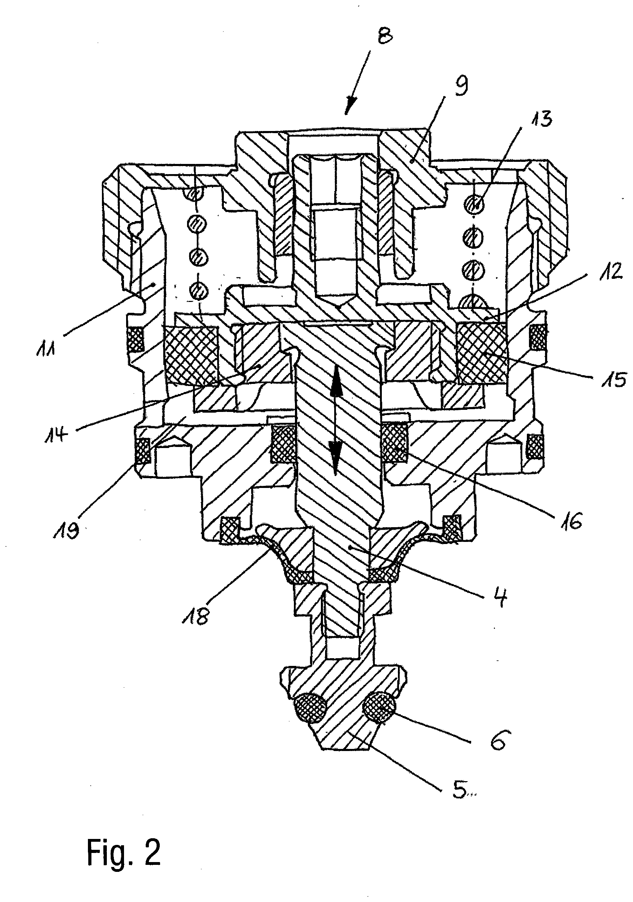

Die Einstellung der Schließstellung bzw. der Öffnungsstellung erfolgt hierbei durch einen Ventilantrieb 8, der in Figur 2 detailliert dargestellt ist und pneumatisch arbeitet.

So weist der pneumatische Ventilantrieb einen äußeren Gehäuseeinsatz 9 auf, der in einen Gehäusekörper 10 des Zweikomponentenabsperrventils eingeschraubt ist.

In den äußeren Gehäuseeinsatz 9 ist wiederum ein innerer Gehäuseeinsatz 11 eingeschraubt.

In dem pneumatischen Ventilantrieb 8 ist ein Kolben 12 verschiebbar angeordnet, wobei der Kolben 12 von einer Ventilfeder 13 in Richtung der Schließstellung gemäß Figur 1A vorgespannt wird. Die Ventilfeder 13 stützt sich hierbei an dem äußeren Gehäuseeinsatz 9 ab und drückt an ihrem gegenüberliegenden Ende gegen den Kolben 12, um diesen in die Schließstellung zu drücken. Der Kolben 12 ist hierbei über einen Kolbeneinsatz 14 mit der Ventilnadel 4 verbunden, sodass der Kolben 12 auf die Ventilnadel 4 und damit auch auf den Nadelkopf wirkt.

Der Kolben 12 ist hierbei von einem Dichtring 15 umgeben, der in dem Ringspalt zwischen dem Kolben 12 einerseits und der Innenwand des inneren Gehäuseeinsatzes 11 angeordnet ist und bei einer Bewegung des Kolbens 12 an der Innenwand des inneren Gehäuseeinsatzes 11 schleift.

Darüber hinaus ist ein weiterer Dichtring 16 vorgesehen, der schleifend auf der Mantelfläche der verschiebbaren Ventilnadel 4 anliegt und dadurch eine weitere Abdichtung bewirkt.

Die Ventilnadel 4 verläuft hierbei teilweise durch einen Ventilraum 17, der im Betrieb mit dem jeweiligen Fluid (Härter H bzw. Stammlack SL) gefüllt ist.

Zwischen dem Ventilantrieb 8 und dem mediengefüllten Ventilraum 17 ist hierbei eine flexible Membran 18 als Dichtelement vorgesehen, um den Ventilraum 17 gegenüber dem Ventilantrieb 8 abzudichten. Die flexible Membran 18 ist mit ihrem äußeren Umfangsrand an dem unteren Ende der inneren Gehäuseeinsatzes 11 dichtend befestigt und weist mittig eine Bohrung auf, durch die die Ventilnadel 4 hindurchgeführt ist. Die Membran 18 ist hierbei fluiddicht und fest mit der Ventilnadel 4 verbunden. Zum einen macht die Membran 18 also die Verschiebebewegung der Ventilnadel 4 zwischen der Schließstellung und der Öffnungsstellung mit. Zum anderen dichtet die Membran 4 aber auch den mediengefüllten Ventilraum 17 gegenüber dem Ventilantrieb 8 ab, wobei keine Schleifbewegung wie bei einem Dichtring erforderlich ist, sodass auch nicht die Gefahr besteht, dass der niederviskose und kriechfähige Härter H in den Ventilantrieb 8 eindringen kann.

Der eigentliche Antrieb erfolgt hierbei durch Steuerluft, die in einen Steuerluftraum 19 unterhalb des Kolbens 12 eingeleitet werden kann, wobei die Steuerluft in dem Steuerluftraum 19 dann den Kolben 12 nach oben drückt. Die Zuführung der Steuerluft in den Steuerluftraum 19 erfolgt hierbei über einen Steuerluftanschluss 20.

Die Steuerluft kann hierbei aus einem herkömmlichen 6-bar-Druckluftnetz bereitgestellt werden, das in Lackieranlagen meist ohnehin zur Verfügung steht. Dies bietet den Vorteil, dass auf eine separate Druckluftversorgung verzichtet werden kann. Der Kolben 12 weist hierbei einen relativ großen effektiven Durchmesser auf, sodass die auf den Kolben wirkende Steuerluft eine relativ große Öffnungskraft erzeugt. Diese Öffnungskraft ist bei einer Druckluftbeaufschlagung durch die Steuerluft um einen bestimmten Öffnungskraftüberschuss größer als die Schließkraft, die die Ventilfeder 13 auf den Kolben 12 ausübt. Dieser Öffnungskraftüberschuss liegt in diesem konkreten Ausführungsbeispiel im Bereich von 57,4 N bis 180 N im Vergleich zu einem Öffnungskraftüberschuss von nur 15 N bei einem herkömmlichen Nadelventil. Dies ermöglicht ein "Losreißen" des Nadelkopfs 5 von dem Ventilsitz 7 auch dann, wenn der Nadelkopf 5 an dem Ventilsitz 7 anhaftet.

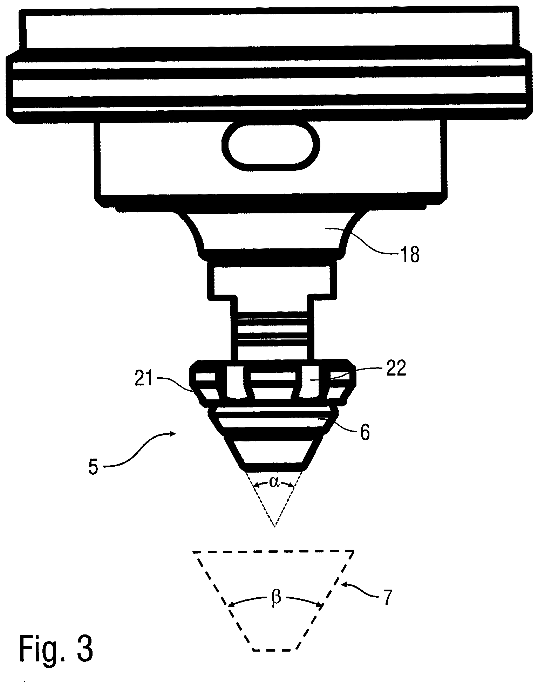

Aus Figur 3 ist weiterhin ersichtlich, dass sich der Nadelkopf 5 mit einem Kopfwinkel λ=35°-50° in Strömungsrichtung verjüngt, wie sich auch der Ventilsitz 7 mit einem Sitzwinkel β=35°-50° in Strömungsrichtung konisch verjüngt.

Die konische Mantelfläche des Nadelkopfs 5 stromaufwärts vor dem Dichtring 6 bildet hierbei eine Abstützfläche 21, die sich in der Schließstellung gemäß Figur 1A an dem Ventilsitz 7 abstützt. Die Abstützfläche 21 bildet hierbei einen Anschlag für die Axialbewegung des Nadelkopfes 5 in die Schließstellung. Dadurch wird eine übermäßige Kompression des Dichtrings 6 verhindert, was der Lebensdauer des Dichtrings 6 zuträglich ist.

Die Abstützfläche 21 ist hierbei durch mehrere axial verlaufende Spülnuten 22 unterbrochen, die über den Umfang des Nadelkopfs 5 verteilt angeordnet sind. Die Spülnuten 22 ermöglichen in der Schließstellung gemäß Figur 1A, dass Spülmittel von dem Härter-Anschluss 1 bzw. dem Stammlack-Anschluss 2 auch den Bereich stromabwärts hinter der Abstützfläche 21 erreichen kann.

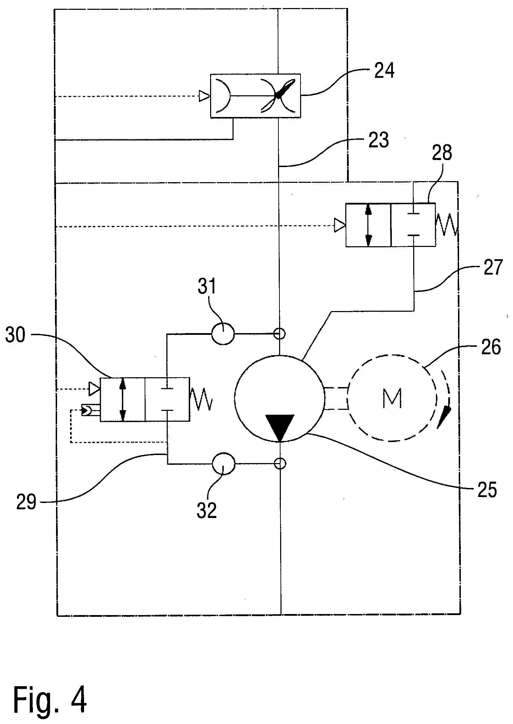

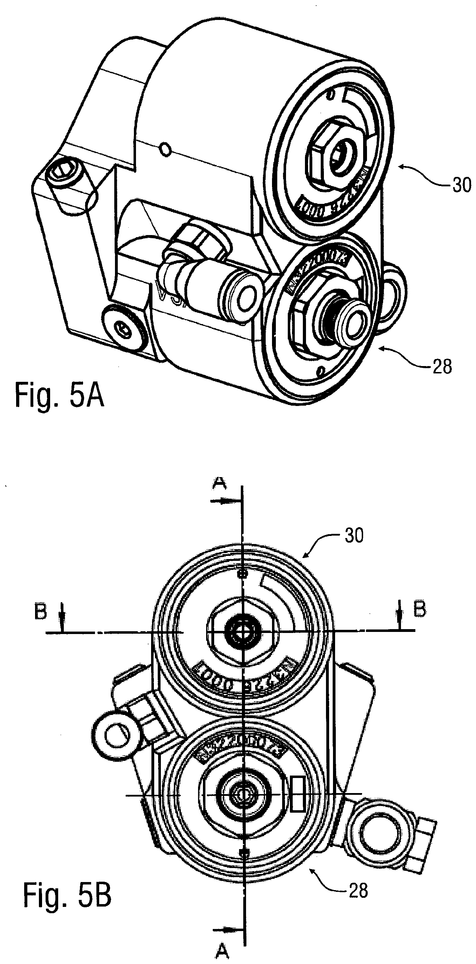

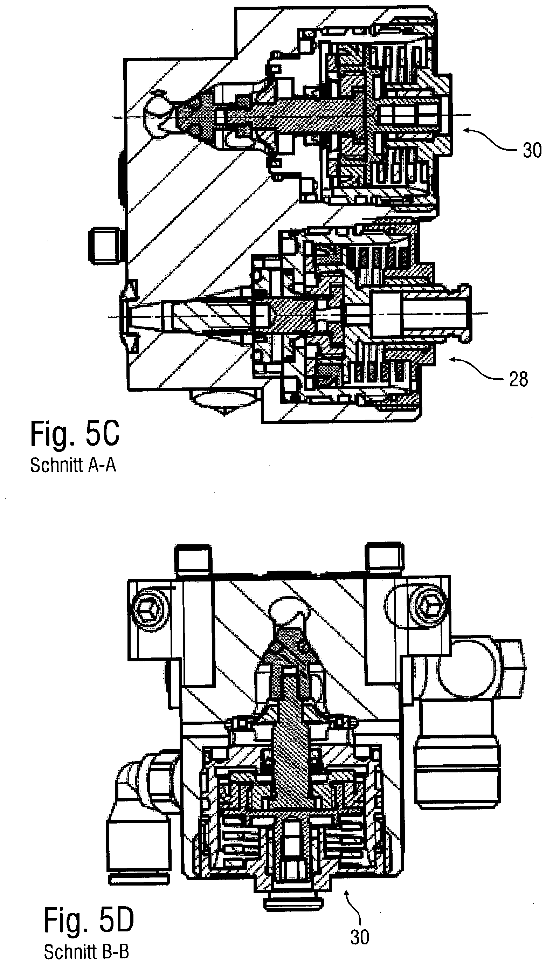

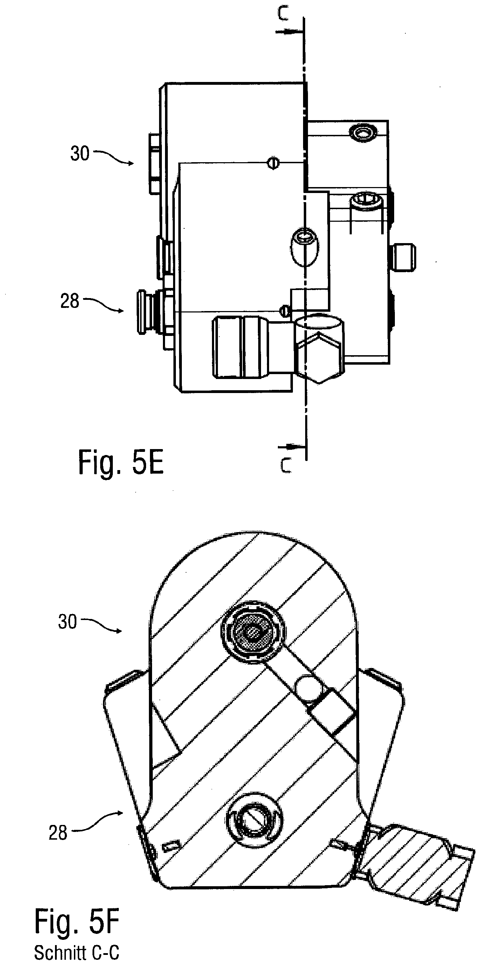

Die Figuren 4-6D zeigen eine Dosieranordnung zur Dosierung von Beschichtungsmittel (z. B. Lack).

Das zu dosierende Beschichtungsmittel wird hierbei durch eine Beschichtungsmittelleitung 23 zugeführt und strömt zunächst durch einen Farbdruckregler 24 und dann durch eine Dosierpumpe 25, wobei der Farbdruckregler 24 und die Dosierpumpe 25 in herkömmlicher Weise ausgebildet sein können. Die Dosierpumpe 25 wird hierbei von einem Elektromotor 26 angetrieben, was ebenfalls aus dem Stand der Technik bekannt ist.

Weiterhin ist zu erwähnen, dass in die Dosierpumpe 25 eine Spülmittelleitung 27 mündet, über die ein Spülmittel eingeleitet werden kann.

In der Spülmittelleitung 27 ist hierbei ein steuerbares Spülmittelventil 28 angeordnet.

Parallel zu der Dosierpumpe 25 ist eine Bypassleitung 29 angeordnet, die eine Umgehung der Dosierpumpe 25 ermöglicht, wie noch detailliert beschrieben wird.

In der Bypassleitung 29 ist ein Bypassventil 30 angeordnet, das die Bypassleitung 29 wahlweise sperren oder freigeben kann.

Zum einen kann das Bypassventil 30 durch ein externes Steuersignal angesteuert werden. Bei einem normalen Dosiervorgang bleibt das Bypassventil 30 dann geschlossen. Bei einem Spülvorgang und nach einem Farbwechsel beim Andrücken der neuen Farbe wird das Bypassventil 30 dann durch das externe Steuersignal kurzzeitig geöffnet. Dies ist vorteilhaft, weil durch diese regelmäßige Betätigung des Bypassventils 30 die Betriebsfähigkeit des Bypassventils 30 aufrechterhalten wird.

Zum anderen ermöglicht das Bypassventil 30 aber auch eine Überdruckentlastung, wenn der Beschichtungsmitteldruck am Ausgang der Dosierpumpe 25 aufgrund einer Betriebsstörung ansteigt. Hierzu weist die Dosieranordnung zwei Drucksensoren 31, 32 auf, die den Beschichtungsmitteldruck stromaufwärts vor bzw. stromabwärts hinter der Dosierpumpe 25 messen und dadurch einen fehlerbedingten Druckanstieg erkennen können. Bei der Erkennung eines solchen fehlerbedingten Druckanstiegs wird das Bypassventil 30 dann durch das externe Steuersignal gesteuert.

Darüber hinaus ist jedoch zu erwähnen, dass das Bypassventil 30 als Membranventil ausgebildet ist. Dies bedeutet, dass der Beschichtungsmitteldruck stromaufwärts hinter der Dosierpumpe 25 auf eine Membran in dem Bypassventil 30 wirkt, so dass das Bypassventil 30 automatisch (eigenmediumbetätigt) öffnet, wenn der Überdruck stromaufwärts hinter der Dosierpumpe 25 einen bestimmten Maximalwert überschreitet. Diese Eigenmediumbetätigung des Bypassventils 30 ist in der Zeichnung durch die gestrichelte Linie dargestellt, die von der Bypassleitung 29 zwischen dem Drucksensor 32 und dem Bypassventil 30 abzweigt und in den Steuereingang des Bypassventils 30 mündet. Diese automatische Überdruckentlastung wirkt auch dann, wenn die beiden Drucksensoren 31, 32 ausgefallen sind oder wenn die externe Steuerung des Bypassventils 30 nicht mehr funktioniert.

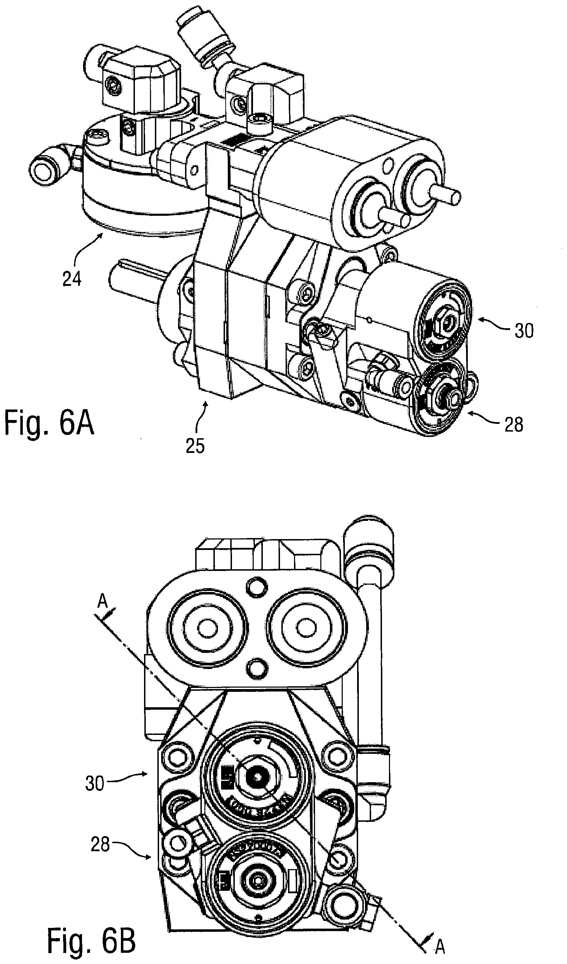

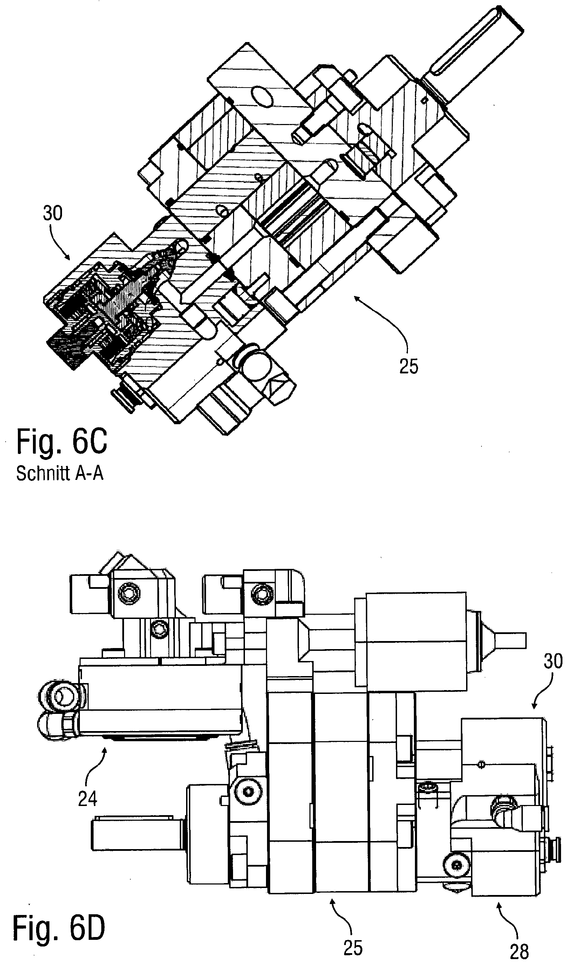

Aus den Figuren 6A-6D ist weiterhin ersichtlich, dass die Ventileinheit mit dem Spülmittelventil 28 und dem Bypassventil 30 in einem Gehäuse angeordnet ist, das an das Gehäuse der Dosierpumpe 25 angeflanscht ist. Die Ventileinheit mit dem Bypassventil 30 und dem Spülmittelventil 28 einerseits und die Dosierpumpe 25 sind also nicht in einem gemeinsamen Gehäuse untergebracht. Dies ist vorteilhaft, weil das Gehäuse der Ventileinheit mit dem Spülmittelventil 28 und dem Bypassventil 30 dann nicht aus Edelstahl bestehen muss, wodurch die Gesamtkosten gesenkt werden können.

### Bezugszeichenliste:

- 1: Härter-Anschluss
- 2: Stammlack-Anschluss
- 3: Auslass
- 4: Ventilnadel
- 5: Nadelkopf
- 6: Dichtring
- 7: Ventilsitz
- 8: Ventilantrieb
- 9: Äußerer Gehäuseeinsatz
- 10: Gehäusekörper des Zweikomponentenabsperrventils
- 11: Innerer Gehäuseeinsatz
- 12: Kolben
- 13: Ventilfeder
- 14: Kolbeneinsatz
- 15: Dichtring um den Kolben
- 16: Dichtring um die Ventilnadel
- 17: Ventilraum
- 18: Membran
- 19: Steuerluftraum
- 20: Steuerluftanschluss
- 21: Abstützfläche
- 22: Spülnut
- 23: Beschichtungsmittelleitung
- 24: Farbdruckregler
- 25: Dosierpumpe
- 26: Elektromotor
- 27: Spülmittelleitung
- 28: Spülmittelventil
- 29: Bypassleitung
- 30: Bypassventil
- 31: Drucksensor
- 32: Drucksensor
- λ: Kopfwinkel
- β: Sitzwinkel
- H: Härter
- SL: Stammlack
- 2K: Zweikomponentenlack

## Patentansprüche

1. Nadelventil zur Steuerung eines Fluidstroms eines Beschichtungsmittels (H, SL) in einer Beschichtungsanlage, insbesondere zur Steuerung eines Stroms eines Zweikomponentengemisches aus zwei Beschichtungsmittelkomponenten (H, SL), insbesondere eines Zweikomponentenlacks aus einem Stammlack (SL) und einem Härter (H), mit
a) einem Beschichtungsmitteleinlass (1, 2) zur Zuführung des Beschichtungsmittels,
b) einem Ventilsitz (7) und
c) einer verschiebbaren Ventilnadel (4) mit einem Nadelschaft und einem Nadelkopf (5),
c1) wobei der Nadelkopf (5) den Ventilsitz (7) in einer Schließstellung der Ventilnadel (4) verschließt,
c2) wohingegen der Nadelkopf (5) den Ventilsitz (7) in einer Öffnungsstellung der Ventilnadel (4) freigibt,
d) einer flexiblen Membran (18), welche die Ventilnadel (4) stromaufwärts vor dem Nadelkopf (5) ringförmig und dichtend umgibt,
**dadurch gekennzeichnet,**
e) **dass** der Beschichtungsmitteldruck an dem Beschichtungsmitteleinlass (1, 2) ab einem bestimmten Öffnungsdruck die Ventilnadel (4) über die Membran (18) aus der Schließstellung in die Öffnungsstellung drückt, und
f) **dass** der Öffnungsdruck des Beschichtungsmittels an dem Beschichtungsmitteleinlass (1, 2) mindestens 8 bar und höchstens 35 bar beträgt.

2. Nadelventil nach Anspruch 1,
**dadurch gekennzeichnet,**
a) **dass** die Ventilnadel (4) in einem Ventilraum (17) verschiebbar angeordnet ist, wobei der Ventilraum (17) zumindest abschnittsweise zylindrisch ist,
b) **dass** die Membran (18) mittig dichtend an dem Nadelschaft der Ventilnadel (4) befestigt ist, und
c) **dass** die Membran (18) mit ihrem Umfangsrand dichtend an der Innenwand des Ventilraums (17) befestigt ist.

3. Nadelventil nach Anspruch 2, **gekennzeichnet durch**
a) einen Ventilantrieb (8) zum Verschieben der Ventilnadel (4), insbesondere als pneumatischer Ventilantrieb (8) mit einem Kolben (12),
b) den Beschichtungsmitteleinlass (1, 2) zur Zuführung des Beschichtungsmittels, wobei der Beschichtungsmitteleinlass (1, 2) auf der dem Ventilantrieb (8) abgewandten Seite der Membran (18) in den Ventilraum (17) mündet, so dass die Membran (18) den Ventilantrieb (8) dem gegenüber beschichtungsmittelgefüllten Ventilraum (17) abdichtet, und
c) einen Beschichtungsmittelauslass zur Abgabe des Beschichtungsmittels, wobei der Beschichtungsmittelauslass in den Ventilsitz (7) mündet, so dass das Beschichtungsmittel in der Öffnungsstellung der Ventilnadel (4) durch den Ventilsitz (7) zu dem Beschichtungsmittelauslass strömen kann.

4. Nadelventil nach Anspruch 3, **dadurch gekennzeichnet, dass** der Ventilantrieb (8) folgendes aufweist:
a) einen verschiebbaren Kolben (12), der auf die Ventilnadel (4) wirkt, um die Ventilnadel (4) zu verschieben,
b) einen Steuerlufteinlass zur Zuführung einer Steuerluft, wobei die Steuerluft auf den Kolben (12) wirkt, um den Kolben (12) und damit auch die Ventilnadel (4) zu verschieben,
c) eine Ventilfeder (13), die mit einer Federkraft auf den Kolben (12) oder die Ventilnadel (4) wirkt,
d) wobei die Federkraft der Ventilfeder (13) in der Schließstellung und in der Öffnungsstellung vorzugsweise mindestens 20 N, 40 N oder 80 N und/oder höchstens 400 N, 200 N oder 100 N beträgt.

5. Nadelventil nach Anspruch 4, **dadurch gekennzeichnet,**
a) **dass** die Ventilfeder (13) die Ventilnadel (4) in Richtung der Schließstellung drückt, und
b) **dass** die Steuerluft die Ventilnadel (4) über den Kolben (12) in Richtung der Öffnungsstellung drückt,
c) **dass** die Ventilfeder (13) und der Nadelkopf (5) vorzugsweise auf gegenüber liegenden Seiten des Kolbens (12) angeordnet ist,
d) **dass** der Kolben (12) vorzugsweise einen Kolbendurchmesser von mindestens 5 mm, 10 mm, 15 mm, 20 mm, 25 mm, 30 mm oder 35 mm aufweist, um beim Bewegen der Ventilnadel (4) in die Öffnungsstellung eine große Öffnungskraft zu erzeugen,
e) **dass** die Steuerluft zum Bewegen der Ventilnadel (4) in die Öffnungsstellung vorzugsweise einen Steuerluftdruck von weniger als 6 bar, insbesondere 5,5 bar, benötigt, so dass die Steuerluft aus einem üblichen 6-bar-Druckluftnetz bezogen werden kann.

6. Nadelventil nach Anspruch 5, **dadurch gekennzeichnet,**
a) **dass** die Ventilfeder (13) die Ventilnadel (4) mit einer bestimmten Schließkraft in Richtung der Schließstellung drückt,
b) **dass** der pneumatische Ventilantrieb (8) bei einer pneumatischen Ansteuerung die Ventilnadel (4) mit einer bestimmten Öffnungskraft in Richtung der Öffnungsstellung drückt,
c) **dass** die Öffnungskraft um einen bestimmten Öffnungskraftüberschuss größer ist als die Schließkraft, um das Nadelventil öffnen zu können, wenn der Nadelkopf (5) an dem Ventilsitz (7) anhaftet,
d) **dass** der Öffnungskraftüberschuss vorzugsweise größer ist als 20 N, 40 N, 60 N, 80 N, 100 N, 120 N oder 180 N.

7. Nadelventil nach Anspruch 4, **dadurch gekennzeichnet,**
a) **dass** die Ventilfeder (13) die Ventilnadel (4) in Richtung der Öffnungsstellung drückt, und
b) **dass** die Steuerluft die Ventilnadel (4) über den Kolben (12) in Richtung der Schließstellung drückt,
c) **dass** die Ventilfeder (13) und der Nadelkopf (5) vorzugsweise auf derselben Seite des Kolbens (12) angeordnet sind.

8. Nadelventil nach einem der Ansprüche 4 bis 7,
**dadurch gekennzeichnet,**
a) **dass** die Membran (18) vorzugsweise einen Membrandurchmesser von mindestens 3 mm, 6 mm oder 9 mm und/oder höchstens 40 mm, 20 mm oder 11 mm aufweist, insbesondere 10 mm, und/oder
b) **dass** der Öffnungsdruck des Beschichtungsmittels an dem Beschichtungsmitteleinlass (1, 2) mindestens 10 bar, 12 bar oder 14 bar und höchstens 22 bar, 18 bar oder 16 bar beträgt.

9. Nadelventil nach einem der vorhergehenden Ansprüche, **dadurch gekennzeichnet,**
a) **dass** sich der Ventilsitz (7) mit einem bestimmten Sitzwinkel (β) in Strömungsrichtung verengt,
b) **dass** sich der Nadelkopf (5) mit einem bestimmten Kopfwinkel (λ) in Strömungsrichtung verengt,
c) **dass** der Sitzwinkel (β) im Wesentlichen gleich dem Kopfwinkel (λ) ist,
d) **dass** der Sitzwinkel (β) vorzugsweise größer ist als 20°, 30° oder 35° und/oder kleiner als 70°, 60° oder 50°,
e) **dass** der Kopfwinkel (λ) vorzugsweise größer ist als 20°, 30° oder 35° und/oder kleiner als 70°, 60° oder 50°,

10. Nadelventil nach einem der vorhergehenden Ansprüche, **dadurch gekennzeichnet,**
a) **dass** in den Nadelkopf (5) der Ventilnadel (4) ein zusätzliches Dichtelement (6) eingesetzt ist, um den Ventilsitz (7) in der Schließstellung abzudichten, und
b) **dass** das Dichtelement (6) aus einem anderen Material besteht als der Nadelkopf (5) der Ventilnadel (4), und
c) **dass** das Dichtelement (6) aus einem elastischen Material besteht, und
d) **dass** das Dichtelement (6) aus Perfluorkautschuk besteht, und
e) **dass** das Dichtelement (6) an den Nadelkopf (5) anvulkanisiert ist, und
f) **dass** das Dichtelement (6) ein Dichtring ist, der in eine Ringnut in dem Nadelkopf (5) eingesetzt ist, und
g) **dass** der Nadelkopf (5) aus Titan besteht.

11. Nadelventil nach Anspruch 10,
**dadurch gekennzeichnet,**
a) **dass** sich der Nadelkopf (5) der Ventilnadel (4) in Strömungsrichtung im Wesentlichen konisch verjüngt,
b) **dass** sich der Ventilsitz (7) in Strömungsrichtung im Wesentlichen konisch verjüngt,
c) **dass** der Nadelkopf (5) in seiner konischen Mantelfläche eine Ringnut aufweist, in die das Dichtelement (6) eingesetzt,
d) **dass** die konische Mantelfläche des Nadelkopfs (5) stromaufwärts vor dem Dichtelement (6) eine ringförmig umlaufende Abstützfläche (21) bildet und sich mit der Abstützfläche (21) an dem Ventilsitz (7) abstützt,
e) **dass** der Nadelkopf (5) in der Abstützfläche (21) mindestens eine axial verlaufende Spülnut (22) aufweist, die in der Schließstellung der Ventilnadel (4) eine Durchleitung von Spülmittel aus dem Ventilraum (17) hin zu dem Dichtelement (6) ermöglicht,
f) **dass** die Spülnut (22) vorzugsweise eine Nutbreite von mindestens 1 mm und höchsten 2 mm aufweist.

12. Nadelventil nach einem der Ansprüche 10 bis 11, **dadurch gekennzeichnet,**
a) **dass** der Nadelkopf (5) einen starren Anschlag (21) aufweist und sich in der Schließstellung mit dem Anschlag (21) an dem Ventilsitz (7) abstützt, insbesondere mit der ringförmig umlaufenden konischen Abstützfläche (21), und
b) **dass** das Dichtelement (6) in dem Nadelkopf (5) in der Schließstellung der Ventilnadel (4) einem Druck ausgesetzt ist, der unabhängig ist von der auf die Ventilnadel (4) wirkenden Schließkraft, da sich der Nadelkopf (5) mit seinem starren Anschlag (21) an dem Ventilsitz (7) abstützt.

13. Beschichtungsanlage mit mindestens einem Nadelventil nach einem der vorhergehenden Ansprüche zur Steuerung eines Stroms eines Beschichtungsmittels, insbesondere zur Steuerung eines Fluidstroms eines Zweikomponentengemisches aus zwei Beschichtungsmittelkomponenten (H, SL), insbesondere eines Zweikomponentenlacks aus einem Stammlack (SL) und einem Härter (H), wobei das Nadelventil vorzugsweise in einem der folgenden Bauteile der Beschichtungsanlage angeordnet ist:
a) einem Rotationszerstäuber,
b) einem Zweikomponentenmischer zur Mischung der beiden Beschichtungsmittelkomponenten,
c) einem Zweikomponentenabsperrventil zur Absperrung oder Freigabe des Zweikomponentengemisches,
d) ein Absperrventil für Härter und/oder Stammlack.

14. Dosieranordnung zum Dosieren eines Beschichtungsmittels, mit
a) einer Beschichtungsmittelleitung (23) zur Durchleitung des Beschichtungsmittels,
b) einer in der Beschichtungsmittelleitung (23) angeordneten Dosierpumpe (25) zum Dosieren des Beschichtungsmittels,
c) einer Bypassleitung (29) zur Umgehung der Dosierpumpe (25), wobei die Bypassleitung (29) stromaufwärts vor der Dosierpumpe (25) von der Beschichtungsmittelleitung (23) abzweigt und stromabwärts hinter der Dosierpumpe (25) wieder in die Beschichtungsmittelleitung (23) einmündet, und
d) einem Bypassventil (30), das in der Bypassleitung (29) angeordnet ist,
**dadurch gekennzeichnet,**
e) **dass** das Bypassventil (30) ein Membranventil ist, nämlich das Nadelventil mit der Membran gemäß einem der Ansprüche 1 bis 12.

15. Dosieranordnung nach Anspruch 14,
**dadurch gekennzeichnet,**
a) **dass** der Beschichtungsmitteldruck stromabwärts hinter dem Bypassventil (30) auf eine Membran in dem Bypassventil (30) wirkt, und
b) **dass** der auf die Membran wirkende Beschichtungsmitteldruck das Bypassventil (30) öffnet, wenn der Beschichtungsmitteldruck einen vorgegebenen Maximalwert überschreitet.

## Claims

1. Needle valve for controlling a fluid flow of a coating composition (H, SL) in a coating system, in particular for controlling a flow of a two-component mixture of two coating composition components (H, SL), in particular of a two-component paint of a master batch (SL) and a curing agent (H), having
a) a coating composition inlet (1, 2) for suppyling the coating composition,
b) a valve seat (7) and
c) a displaceable valve needle (4) having a needle stem and a needle head (5),
c1) wherein the needle head (5) closes the valve seat (7) when the valve needle (4) is in a closed position,
c2) whereas the needle head (5) frees the valve seat (7) when the valve needle (4) is in an open position,
d) a flexible membrane (18) which surrounds the valve needle (4) upstream of the needle head (5) in an annular and sealing manner,
**characterised in that**
e) above a specific opening pressure, the coating composition pressure at the coating composition inlet (1, 2) pushes the valve needle (4), *via* the membrane (18), out of the closed position into the open position, and
f) the opening pressure of the coating composition at the coating composition inlet (1, 2) is at least 8 bar and not more than 35 bar.

2. Needle valve according to claim 1,
**characterised in that**
a) the valve needle (4) is displaceably arranged in a valve chamber (17), wherein the valve chamber (17) is cylindrical at least in part,
b) the membrane (18) is fixed in the middle to the needle stem of the valve needle (4) in a sealing manner, and
c) the membrane (18) is fixed by its peripheral edge to the inside wall of the valve chamber (17) in a sealing manner.

3. Needle valve according to claim 2, **characterised by**
a) a valve drive (8) for displacing the valve needle (4), in particular in the form of a pneumatic valve drive (8) having a piston (12),
b) the coating composition inlet (1, 2) for supplying the coating composition, wherein the coating composition inlet (1, 2) opens into the valve chamber (17) on the side of the membrane (18) remote from the valve drive (8), so that the membrane (18) seals the valve drive (8) with respect to the valve chamber (17) filled with coating composition, and
c) a coating composition outlet for discharging the coating composition, wherein the coating composition outlet opens into the valve seat (7) so that, when the valve needle (4) is in the open position, the coating composition is able to flow through the valve seat (7) to the coating composition outlet.

4. Needle valve according to claim 3, **characterised in that** the valve drive (8) has the following:
a) a displaceable piston (12) which acts upon the valve needle (4) in order to displace the valve needle (4),
b) a control air inlet for supplying control air, wherein the control air acts upon the piston (12) in order to displace the piston (12) and thus also the valve needle (4),
c) a valve spring (13) which acts upon the piston (12) or the valve needle (4) with a spring force,
d) wherein the spring force of the valve spring (13) in the closed position and in the open position is preferably at least 20 N, 40 N or 80 N and/or not more than 400 N, 200 N or 100 N.

5. Needle valve according to claim 4,
**characterised in that**
a) the valve spring (13) pushes the valve needle (4) in the direction towards the closed position, and
b) the control air pushes the valve needle (4), *via* the piston (12), in the direction towards the open position,
c) the valve spring (13) and the needle head (5) are preferably arranged on opposite sides of the piston (12),
d) the piston (12) preferably has a piston diameter of at least 5 mm, 10 mm, 15 mm, 20 mm, 25 mm, 30 mm or 35 mm in order to generate a great opening force when the valve needle (4) moves into the open position,
e) the control air preferably requires a control air pressure of less than 6 bar, in particular 5.5 bar, to move the valve needle (4) into the open position, so that the control air can be obtained from a conventional 6-bar compressed air network.

6. Needle valve according to claim 5,
**characterised in that**
a) the valve spring (13) pushes the valve needle (4) in the direction towards the closed position with a specific closing force,
b) the pneumatic valve drive (8), when pneumatically actuated, pushes the valve needle (4) in the direction towards the open position with a specific opening force,
c) the opening force is greater by a specific opening force excess than the closing force, so as to be able to open the needle valve if the needle head (5) adheres to the valve seat (7),
d) the opening force excess is preferably greater than 20 N, 40 N, 60 N, 80 N, 100 N, 120 N or 180 N.

7. Needle valve according to claim 4,
**characterised in that**
a) the valve spring (13) pushes the valve needle (4) in the direction towards the open position, and
b) the control air pushes the valve needle (4), *via* the piston (12), in the direction towards the closed position,
c) the valve spring (13) and the needle head (5) are preferably arranged on the same side of the piston (12).

8. Needle valve according to any one of claims 4 to 7, **characterised in that**
a) the membrane (18) preferably has a membrane diameter of at least 3 mm, 6 mm or 9 mm and/or not more than 40 mm, 20 mm or 11 mm, in particular 10 mm,
b) the opening pressure of the coating composition at the coating composition inlet (1, 2) is at least 10 bar, 12 bar or 14 bar and/or not more than 22 bar, 18 bar or 16 bar.

9. Needle valve according to any one of the preceding claims, **characterised in that**
a) the valve seat (7) narrows in the direction of flow with a specific seat angle (β),
b) the needle head (5) narrows in the direction of flow with a specific head angle (λ),
c) the seat angle (β) is substantially equal to the head angle (λ),
d) the seat angle (β) is preferably greater than 20°, 30° or 35° and/or smaller than 70°, 60° or 50°,
e) the head angle (λ) is preferably greater than 20°, 30° or 35° and/or smaller than 70°, 60° or 50°.

10. Needle valve according to any one of the preceding claims, **characterised in that**
a) an additional sealing element (6) is installed in the needle head (5) of the valve needle (4) in order to seal the valve seat (7) in the closed position, and
b) the sealing element (6) is made of a different material than the needle head (5) of the valve needle (4), and
c) the sealing element (6) is made of a resilient material, and
d) the sealing element (6) is made of perfluoro rubber, and
e) the sealing element (6) is moulded onto the needle head (5), and
f) the sealing element (6) is a sealing ring which is installed in an annular groove in the needle head (5), and
g) the needle head (5) is made of titanium.

11. Needle valve according to claim 10,
**characterised in that**
a) the needle head (5) of the valve needle (4) tapers substantially conically in the direction of flow,
b) the valve seat (7) tapers substantially conically in the direction of flow,
c) the needle head (5) has in its conical lateral surface an annular groove in which the sealing element (6) is installed,
d) the conical lateral surface of the needle head (5) forms an annular peripheral supporting surface (21) upstream of the sealing element (6) and rests with the supporting surface (21) on the valve seat (7),
e) the needle head (5) has in the supporting surface (21) at least one flushing groove (22) running axially which, when the valve needle (4) is in the closed position, allows flushing medium to pass from the valve chamber (17) to the sealing element (6),
f) the flushing groove (22) preferably has a groove width of at least 1 mm and not more than 2 mm.

12. Needle valve according to either claim 10 or claim 11, **characterised in that**
a) the needle head (5) has a rigid stop (21) and, in the closed position, rests with the stop (21) on the valve seat (7), in particular with the annular peripheral conical supporting surface (21), and
b) when the valve needle (4) is in the closed position, the sealing element (6) in the needle head (5) is exposed to a pressure which is independent of the closing force acting upon the valve needle (4), since the needle head (5) is resting with its rigid stop (21) on the valve seat (7).

13. Coating system having at least one needle valve according to any of the preceding claims for controlling a flow of a coating composition, in particular for controlling a fluid flow of a two-component mixture of two coating composition components (H, SL), in particular of a two-component paint consisting of a master batch (SL) and a curing agent (H), wherein the needle valve is preferably arranged in one of the following components of the coating system,
a) a rotary atomiser,
b) a two-component mixer for mixing the two coating composition components,
c) a two-component shut-off valve for shutting off or releasing the two-component mixture,
d) a shut-off valve for curing agent and/or master batch.

14. Metering arrangement for metering a coating composition, having
a) a coating composition line (23) for carrying the coating composition,
b) a metering pump (25), arranged in the coating composition line (23), for metering the coating composition,
c) a bypass line (29) for bypassing the metering pump (25), wherein the bypass line (29) branches from the coating composition line (23) upstream of the metering pump (25) and merges into the coating composition line (23) again downstream of the metering pump (25), and
d) a bypass valve (30) which is arranged in the bypass line (29),
**characterised in that**
e) the bypass valve (30) is a membrane valve, namely the needle valve having a membrane according to any one of claims 1 to 12.

15. Metering arrangement according to claim 14, **characterised in that**
a) the coating composition pressure downstream of the bypass valve (30) acts upon a membrane in the bypass valve (30), and
b) the coating composition pressure acting upon the membrane opens the bypass valve (30) if the coating composition pressure exceeds a predetermined maximum value.

## Revendications

1. Soupape à pointeau pour le contrôle du débit d'un produit de revêtement (H, SL) dans une installation de revêtement, plus particulièrement pour le contrôle d'un débit d'un mélange bi-composant constitué de deux composants de produit de revêtement (H, SL), plus particulièrement d'une peinture bi-composant constituée d'une peinture de base (SL) et d'un durcisseur (H), avec
a) une entrée de produit de revêtement (1, 2) pour l'introduction du produit de revêtement,
b) un siège de soupape (7) et
c) un pointeau de soupape coulissant (4) avec une tige de pointeau et une tête de pointeau (5),
c1) dans lequel la tête de pointeau (5) obture le siège de soupape (7) dans une position de fermeture du pointeau de soupape (4),
c2) dans lequel la tête de pointeau (5) libère le siège de soupape (7) dans une position d'ouverture du pointeau de soupape (4),
d) une membrane flexible (18), qui entoure de manière annulaire et étanche le pointeau de soupape (4) en amont de la tête du pointeau (5),
**caractérisée en ce que**
e) la pression du produit de revêtement au niveau de l'entrée du produit de revêtement (1, 2) comprime, à partir d'une pression d'ouverture déterminée, le pointeau de soupape (4), par l'intermédiaire de la membrane (18), de la position de fermeture vers la position d'ouverture et
f) la pression d'ouverture du produit de revêtement au niveau de l'entrée du produit de revêtement (1, 2) est d'au moins 8 bar et de 35 bar maximum.

2. Soupape à pointeau selon la revendication 1,
**caractérisée en ce que**
a) le pointeau de soupape (4) est disposé de manière coulissante dans un espace de soupape (17), dans lequel l'espace de soupape (17) est cylindrique au moins par endroits,
b) la membrane (18) est fixée au centre de manière étanche à la tige du pointeau de soupape (4) et
c) la membrane (18) est fixée, avec son bord circonférentiel, de manière étanche à la paroi interne de l'espace de soupape (17).

3. Soupape à pointeau selon la revendication 2, **caractérisée par**
a) un entraînement de soupape (8) pour le coulissement du pointeau de soupape (4), plus particulièrement sous la forme d'un entraînement de soupape pneumatique (8) avec un piston (12),
b) l'entrée de produit de revêtement (1, 2) pour l'introduction du produit de revêtement, dans lequel l'entrée de produit de revêtement (1, 2) débouche, sur le côté de la membrane (18) opposé à, l'entraînement de soupape (8), dans l'espace de soupape (17), de façon à ce que la membrane (18) étanchéifie l'entraînement de soupape (8) par rapport à l'espace de soupape (17) rempli de produit de revêtement et
c) une sortie de produit de revêtement pour la distribution du produit de revêtement, dans lequel la sortie de produit de revêtement débouche dans le siège de soupape (7), de façon à ce que le produit de revêtement puisse s'écouler, dans la position d'ouverture du pointeau de soupape (4), à travers le siège de soupape (7) vers la sortie de produit de revêtement.

4. Soupape à pointeau selon la revendication 3, **caractérisée en ce que** l'entraînement de soupape (8) comprend ce qui suit :
a) un piston coulissant (12) qui agit sur le pointeau de soupape (4) afin de faire coulisser le pointeau de soupape (4),
b) une entrée d'air de commande pour l'introduction d'un air de commande, dans lequel l'air de commande agit sur le piston (12) afin de faire coulisser le pston (12) et donc également le pointeau de soupape (4),
c) un ressort de soupape (13), qui agit avec une force élastique sur le piston (12) ou le pointeau de soupape (4),
d) dans lequel la force élastique du ressort de soupape (13) est, de préférence, dans la position de fermeture et dans la position d'ouverture, d'au moins 20 N, 40 N ou 80 N et/ou de 400 N, 200 N ou 100 N maximum.

5. Soupape à pointeau selon la revendication 4, **caractérisée en ce que**
a) le ressort de soupape (13) pousse le pointeau de soupape (4) dans la direction de la position de fermeture et
b) l'air de commande pousse le pointeau de soupape (4) par l'intermédiaire du piston (12) dans la direction de la position d'ouverture,
c) le ressort de soupape (13) et la tête de pointeau (5) sont disposés de préférence sur des côtés opposés du piston (12),
d) le piston (12) présente de préférence un diamètre d'au moins 5 mm, 10 mm, 15 mm, 20 mm, 25 mm, 30 mm ou 35 mm, afin de générer, lors du déplacement du pointeau de soupape (4) vers la position d'ouverture, une grande force d'ouverture,
e) l'air de commande pour le déplacement du pointeau de soupape (4) vers la position d'ouverture nécessite de préférence une pression d'air de commande inférieure à 6 bar, plus particulièrement de 5,5 bar, de façon à ce que l'air de commande puisse provenir d'un réseau d'air comprimé standard de 6 bar.

6. Soupape à pointeau selon la revendication 5, **caractérisée en ce que**
a) le ressort de soupape (13) pousse le pointeau de soupape (4) avec une force de fermeture déterminé dans la direction de la position de fermeture,
b) l'entraînement de soupape pneumatique (8) pousse, dans le cas d'un contrôle pneumatique, le pointeau de soupape (4) avec une force d'ouverture déterminé dans la direction de la position d'ouverture,
c) la force d'ouverture est supérieure, d'un excédent de force d'ouverture déterminé, à la force de fermeture, afin de pouvoir ouvrir la soupape à pointeau lorsque la tête de pointeau (5) adhère au siège de soupape (7),
d) l'excédent de force d'ouverture est de préférence supérieur à 20 N, 40 N, 60 N, 80 N, 100 N, 120 N ou 180 N.

7. Soupape à pointeau selon la revendication 4, **caractérisée en ce que**
a) le ressort de soupape (13) pousse le pointeau de soupape (4) dans la direction de la position d'ouverture et
b) l'air de commande pousse le pointeau de soupape (4) par l'intermédiaire du piston (12) dans la direction de la position de fermeture,
c) le ressort de soupape (13) et la tête de pointeau (5) sont disposés de préférence sur le même côté du piston (12).

8. Soupape à pointeau selon l'une des revendications 4 à 7, **caractérisée en ce que**
a) la membrane (18) présente de préférence un diamètre d'au moins 3 mm, 6 mm ou 9 mm et/ou de 40 mm, 20 mm ou 11 mm maximum, plus particulièrement de 10 mm et/ou
b) la pression d'ouverture du produit de revêtement au niveau de l'entrée de produit de revêtement (1, 2) est d'au moins 10 bar, 12 bar ou 14 bar et de 22 bar, 18 bar ou de 16 bar maximum.

9. Soupape à pointeau selon l'une des revendications précédentes, **caractérisée en ce que**
a) le siège de soupape (7) se rétrécit avec un angle de siège (β) déterminé dans la direction de l'écoulement,
b) la tête du pointeau (5) se rétrécit avec un angle de tête (λ) déterminé dans la direction de l'écoulement,
c) l'angle de siège (β) est globalement égal à l'angle de tête (λ),
d) l'angle de siège (β) est de préférence supérieur à 20°, 30° ou 35° et/ou inférieur à 70°, 60° ou 50°,
e) l'angle de tête (λ) est de préférence supérieur à 20°, 30° ou 35° et/ou inférieur à 70°, 60° ou 50°.

10. Soupape à pointeau selon l'une des revendications précédentes, **caractérisée en ce que**
a) dans la tête de pointeau (5) du pointeau de soupape (4) est inséré un élément d'étanchéité supplémentaire (6) afin d'étanchéifier le siège de soupape (7) dans la position de fermeture et
b) l'élément d'étanchéité (6) est constitué d'un matériau différent de la tête de pointeau (5) du pointeau de soupape (4) et
c) l'élément d'étanchéité (6) est constitué d'un matériau élastique et
d) l'élément d'étanchéité (6) est constitué d'un caoutchouc perfluoré et
e) l'élément d'étanchéité (6) est vulcanisé sur la tête du pointeau (5) et
f) l'élément d'étanchéité (6) est une bague d'étanchéité qui est insérée dans une rainure annulaire dans la tête du pointeau (5) et
g) la tête du pointeau (5) est constituée de titane.

11. Soupape à pointeau selon la revendication 10,
**caractérisée en ce que**
a) la tête de pointeau (5) du pointeau de soupape (4) se rétrécit de manière globalement conique dans la direction de l'écoulement,
b) le siège de soupape (7) se rétrécit de manière globalement conique dans la direction de l'écoulement,
c) la tête de pointeau (5) présente, dans sa surface d'enveloppe conique, une rainure annulaire dans laquelle l'élément d'étanchéité (6) est inséré,
d) la surface d'enveloppe conique de la tête de pointeau (5) forme, en amont de l'élément d'étanchéité (6), une surface d'appui annulaire (21) et s'appuie, avec la surface d'appui (21), contre le siège de soupape (7),
e) la tête de pointeau (5) comprend, dans la surface d'appui (21), au moins une rainure de rinçage (22) s'étendant axialement, qui permet, dans la position de fermeture du pointeau de soupape (4), un passage d'un produit de rinçage de l'espace de soupape (17) vers l'élément d'étanchéité (6),
f) la rainure de rinçage (22) présente de préférence une largeur de rainure d'au moins 1 mm et de 2 mm maximum.

12. Soupape à pointeau selon l'une des revendications 10 à 11,
**caractérisée en ce que**
a) la tête de pointeau (5) comprend une butée rigide (21) et s'appuie, dans la position de fermeture, avec la butée (21), contre le siège de soupape (7), plus particulièrement avec la surface d'appui conique annulaire (21) et
b) l'élément d'étanchéité (6) est exposé, dans la tête de pointeau (5), dans la position de fermeture du pointeau de soupape (4), à une pression qui est indépendante de la force de fermeture agissant sur le pointeau de soupape (4), car la tête de pointeau (5) s'appuie, avec sa butée rigide (21), contre le siège de soupape (7).

13. Installation de revêtement avec au moins une soupape à pointeau selon l'une des revendications précédentes pour le contrôle d'un débit de produit de revêtement, plus particulièrement pour le contrôle d'un débit d'un mélange bi-composant constitué de deux composants de produit de revêtement (H, SL), plus particulièrement d'une peinture bi-composant constituée d'une peinture de base (SL) et d'un durcisseur (H), dans lequel la soupape à pointeau est disposé de préférence dans un des composants suivants de l'installation de revêtement :
a) un pulvérisateur rotatif,
b) un mélangeur bi-composant pour le mélange des deux composants du produit de revêtement,
c) une soupape d'arrêt bi-composant pour le blocage ou la libération du mélange bi-composant,
d) une soupape d'arrêt pour le durcisseur et/ou la peinture de base.

14. Dispositif de dosage pour le dosage d'un produit de revêtement, avec
a) une conduite de produit de revêtement (23) pour le passage du produit de revêtement,
b) une pompe de dosage (25) disposée dans la conduite de produit de revêtement (23), pour le dosage du produit de revêtement,
c) une conduite de dérivation (29) pour le contournement de la pompe de dosage (25), dans lequel la conduite de dérivation (29) bifurque, en amont de la pompe de dosage (25), de la conduite de produit de revêtement (23) et débouche à nouveau, en aval de la pompe de dosage (25), dans la conduite de produit de revêtement (23) et
d) une soupape de dérivation (30) qui est disposée dans la conduite de dérivation (29),
**caractérisée en ce que**
e) la soupape de dérivation (30) est une soupape à membrane, à savoir la soupape à pointeau avec la membrane selon l'une des revendications 1 à 12.

15. Dispositif de dosage selon la revendication 14,
**caractérisé en ce que**
a) la pression du produit de revêtement agit, en aval de la soupape de dérivation (30), sur une membrane dans la soupape de dérivation (30) et
b) la pression du produit de revêtement agissant sur la membrane ouvre la soupape de dérivation (30) lorsque la pression du produit de revêtement dépasse une valeur maximale prédéterminée.
